# EUROPEAN PATENT APPLICATION

(11) **EP 2 835 284 A1**
(43) Date of publication of application: **11.02.2015**
(21) Application number: 13179691.4
(22) Date of filing: 08.08.2013
(51) Int. Cl.: B60Q 5/00

(54) **Sound generator for electric vehicles**

(71) Applicant: Bleiner, Thomas, 6830 Chiasso (CH)
(72) Inventor: Bleiner, Thomas, 6830 Chiasso (CH)
(74) Representative: Mozzi, Matteo

(57) **Abstract**

It is the object of the present invention a sound generator (1) connectable to an electric or hybrid vehicle (9) with a motion detection interface (2) that can be associated to a member of the kinematic chain transmitting the motion from the electric motor to the wheel and with an acoustic apparatus (3) suitable to produce a sound and modulate the characteristics thereof (volume, tonality, frequency, ...) depending on the movement of the member detected by the detection interface.

## Description

The electric or hybrid vehicles are characterized by their noiselessness. The noiselessness of the electric propulsion is proposed on one hand as an advantageous characteristic. Vehicles capable of moving in a purely electric mode do not disturb the peace with their noise. However, this very characteristic is also felt as a problem: in fact, cases of accidents involving electric vehicles and pedestrians or cyclists who are not warned of a vehicle approaching by any noise start to be frequent. The blind are particularly exposed to this risk.

In addition, the private driver looking for a satisfactory run finds satisfaction also from listening to the engine sound, which sound follows the vehicle performance and transmits it to the driver. In the collective imagination, the motor rumble is associated to manliness, and it is a noise that transmits a pleasant feeling to the driver. While driving an electric vehicle, the auditory component is lacking; therefore the participation of the sense of hearing lacks in the creation of the overall feeling felt by the driver engaged in driving. Those drivers who are wishful to get a feeling when driving are dissuaded from using an electric vehicle exactly for the lack of the auditory component they seek.

To date, in order to obviate the problem of noiselessness from the safety viewpoint, the electric vehicles have been provided with acoustic signals, such as buzzers. However, this solution has drawbacks.

From the safety viewpoint, it is a new alert signal that, unlike the typical engine rumble, may not be able to induce an instantaneous effect on the pedestrian or the cyclist that comes to be in the trajectory of the same vehicle.

From the pleasantness viewpoint, it is a sound that does not concur to any feeling in the driver; therefore it does not solve the problem of the poor manliness of a soundless vehicle.

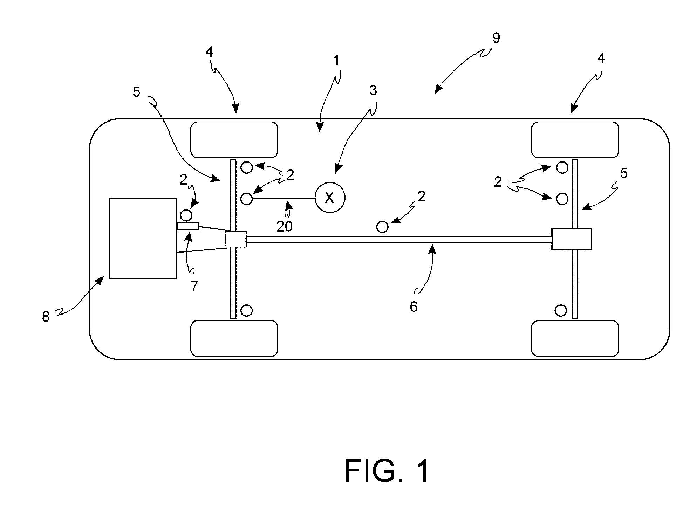

Surprisingly, the present invention describes a sound generator connectable to an electric vehicle capable of playing a sound that varies as the vehicle movement varies, therefore that is capable of playing a typical modulation of the thermal engine and the alert and pleasure feeling associated thereto.
Figures
Fig. 1: scheme of transmission of the motion in an electric propulsion vehicle.

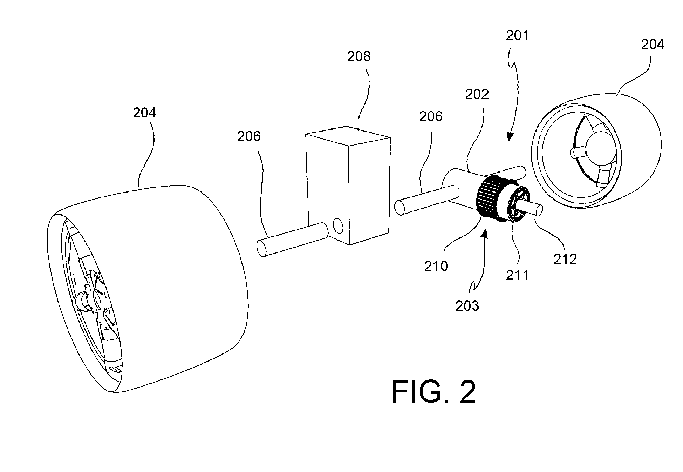

Fig. 2: exploded view of an embodiment of the sound generator of the present invention.

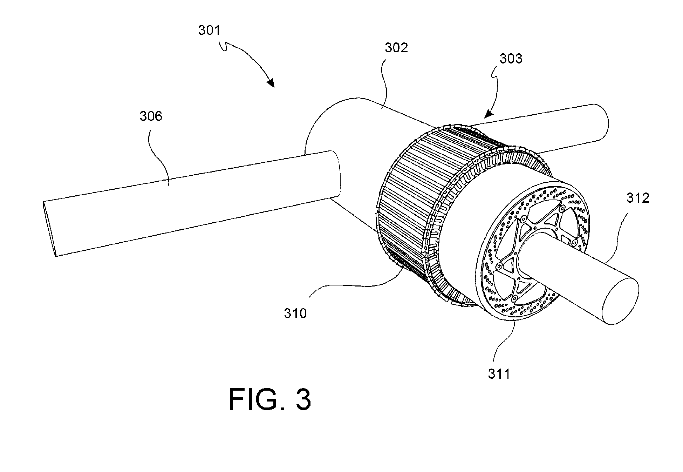

Fig. 3: detail of the sound generator of the embodiment of Fig. 2.

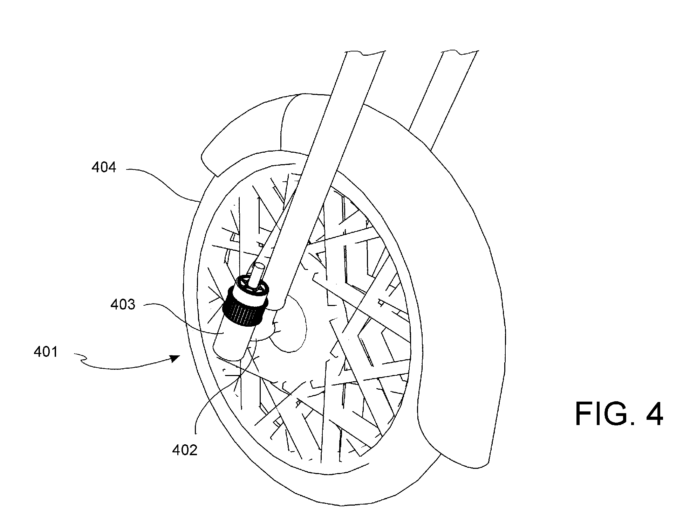

Fig. 4: sound generator applied to the front wheel of a motor-bicycle.

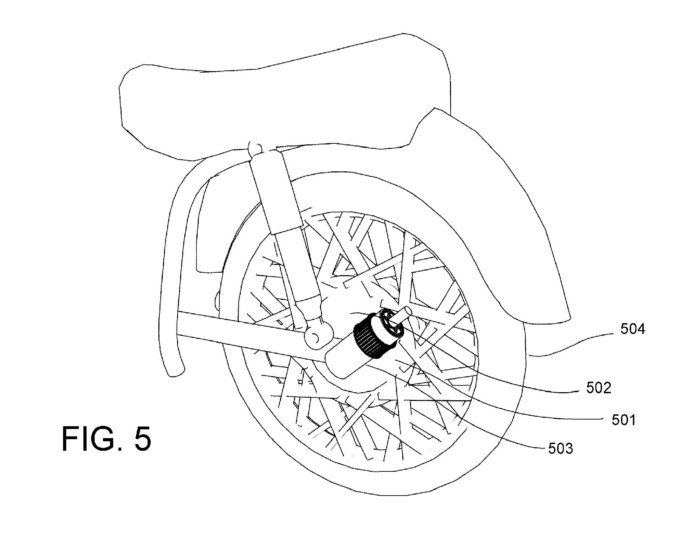

Fig. 5: sound generator applied to the rear wheel of a motor-bicycle.

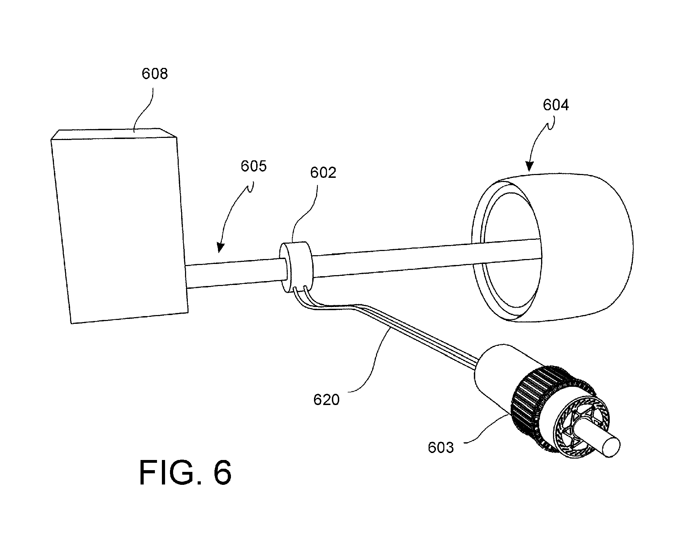

Fig. 6: a further embodiment of the sound generator of the present invention.
Fig. 7: sound generator mounted during the constructive step of the vehicle.

It is the object of the present invention a sound generator (1) connectable to an electric or hybrid vehicle (9) with a motion detection interface (2) that can be associated to at least one member of the kinematic chain transmitting the motion from the electric motor to the wheel and with an acoustic apparatus (3) suitable to produce a sound and modulate the characteristics thereof (volume, tonality, frequency, ...) depending on the movement of the member detected by the detection interface.

Said kinematic chain in an electric vehicle is substantially composed of a transmission shaft (6) transmitting the motion received from the drive shaft (7) emerging from the electric motor (8), by a conical gear and suitable axle shafts (5) to the wheels (4).

The detection interface (2) is selected from the group comprising rotational speed sensors, for example Hall effect sensors, optical sensors, or it is with a mechanical coupling, for example, a gear.

Said detection interface is associated to one or more members of said kinematic chain so as to detect the movement thereof. For example, said detection interface (2) may be associated to at least one wheel (4), to at least one axle shaft (5), to the transmission shaft (6), and/or to the drive shaft (7).

The acoustic apparatus (3) is selected from the group comprising mechanical, electro-pneumatic, electronic, or electro-acoustic tools. By way of non-limiting example only, the acoustic apparatus may be a drum or a siren.

In an embodiment, said detection interface (2, 602) is connected to said acoustic apparatus (3, 603) by transmission cables (20, 620).

In a further embodiment, said detection interface (202) and said acoustic apparatus (203) are coupled directly, preferably by means of gears.

Said acoustic apparatus may be actuated or not according to the user's choice.

In a preferred embodiment, said acoustic apparatus (3, 203, 303, 403, 503, 603, 703) is a mechanical apparatus and comprises at least one mechanical resonating chamber (310) that has at least one outlet (311).

Preferably, at least one acoustic frequency adjusting member (312) of the same resonating chamber is connected to said at least one resonating chamber. Preferably, said at least one acoustic frequency adjusting member (312) is a member inserted within the resonating chamber, the insertion degree of which is variable: the variation of the insertion degree of said member in the resonating chamber varies the volume of the resonating chamber, thus modifying the frequency of the emitted sound.

In a preferred embodiment, said acoustic frequency adjusting member (312) is a cylinder the position thereof within the resonating chamber (310) is controlled manually, for example by screwing-unscrewing it, or it is controlled in an electronic manner.

Said sound generator is capable of producing a sound that is modulated in a direct manner from the vehicle speed, since it is connected to at least one member of the kinematic chain for transmission of the motion and unique, since it is adjustable by said adjusting member (312) together with the fact that each machine, while having the same model and being built in series, will have such features as to make it a unique and distinctive resonating chamber.

The characteristics of uniqueness make the vehicle mounting said sound generator identifiable.

The identifiably of the vehicle may be advantageously used in a number of applications. By way of example only, said uniqueness finds application in the creation of an interactive profile on social networks, or for the recognition of the same vehicle by the police and law enforcement agencies. Again, said uniqueness finds application in home automation systems such as, by way of non-limiting example, automatic gates, garage doors, parking lot or toll-house bars or other public or private electronic device (subject to a registration of one's own vehicle through the emitted sound).

It is a further object of the present invention the use of a sound generator (1) as described above in an electric or hybrid vehicle selected from the group comprising motor vehicles, trucks, motorcycles, buses, working vehicles.

It is a further object of the present invention an electric or hybrid vehicle comprising a sound generator (1) as described above.

Said sound generator will be able to be applied on finished vehicles and already in use or during assembly of the same vehicles.

In an embodiment, said sound generator (401) is applied to the front wheel (404) of a motorcycle. The detection interface (402) is associated to the hub of said wheel.

In a further embodiment, said sound generator (501) is applied to the rear wheel (504) of a motorcycle. The detection interface (502) is associated to the hub of said wheel.

It is also an object of the present invention a method for obtaining an electric or hybrid vehicle emitting a modular sound depending on the motion of the same vehicle, comprising:
- the provision of an electric or hybrid vehicle (9);
- the provision of a sound generator (1) comprising a detection interface motion (2) and an acoustic apparatus (3);
- the association of said detection interface motion (2) with at least one member of the kinematic chain transmitting the motion from the electric motor to the wheel of said electric or hybrid vehicle (9).

The finding of the present invention surprisingly confers to an electric or hybrid vehicle a modulated sonority so as to make such modulation comparable to that produced by a thermal engine. Since, in a preferred embodiment, the acoustic apparatus of the present invention is a mechanical one, the sonority given by it and the modulations thereof are completely comparable to those felt in the presence of a thermal engine. Electric or hybrid vehicles provided with the device of the present invention are capable of arouse the sense of hearing of the driver in a manner that is comparable to a thermal engine.

## Claims

1. A sound generator (1) connectable to an electric or hybrid vehicle (9) with a motion detection interface (2) that can be associated to a member of the kinematic chain transmitting the motion from the electric motor to the wheel and with an acoustic apparatus (3) suitable to produce a sound and modulate the characteristics thereof (volume, tonality, frequency, ...) depending on the movement of the member detected by said detection interface (2).

2. The sound generator (1) according to claim 1, wherein said detection interface (2) is selected from the group comprising rotational speed sensors, for example, Hall effect sensors, optical sensors, or it is with a mechanical coupling, for example, a gear.

3. The sound generator (1) according to claim 1, wherein said acoustic apparatus (3) is selected from the group comprising mechanical, electro-pneumatic, electronic, or electro-acoustic tools.

4. The sound generator (1) according to one of the claims 1 to 3, wherein said at least one member of the kinematic chain to which said detection interface (2) can be associated is selected from the group comprising at least one wheel (4), at least one axle shaft (5), the transmission shaft (6), and/or the drive shaft (7).

5. The sound generator (301) according to one of the claims 1 to 4, wherein said acoustic apparatus (303) is a mechanical tool and preferably comprises at least one mechanical resonating chamber (310).

6. The sound generator (301) according to claim 5, wherein said at least one mechanical resonating chamber (310) comprises at least one frequency adjusting member (312).

7. The sound generator (301) according to claim 6, wherein said at least one frequency adjusting member (312) is a member inserted within the same resonating chamber the insertion degree of which is variable.

8. The use of a sound generator (1) according to one of the claims 1 to 7 in an electric or hybrid vehicle selected from the group comprising motor vehicles, trucks, motorcycles, buses, working vehicles.

9. An electric or hybrid vehicle comprising a sound generator in accordance with one of the claims 1 to 7.

10. A method for obtaining an electric or hybrid vehicle emitting a modular sound depending on the motion of the same vehicle, comprising:
- the provision of an electric or hybrid vehicle (9);
- the provision of a sound generator (1) according to one of the claims 1 to 7, comprising a detection interface motion (2) and an acoustic apparatus (3);
- the association of said detection interface motion (2) with at least one member of the kinematic chain transmitting the motion from the electric motor to the wheel of said electric or hybrid vehicle (9).
